# EUROPÄISCHE PATENTSCHRIFT

(11) **EP 1 785 035 B1**
(45) Veröffentlichungstag und Bekanntmachung des Hinweises auf die Patenterteilung: **13.01.2010**
(21) Anmeldenummer: 06124029.7
(22) Anmeldetag: 14.11.2006
(51) Int. Cl.: A22C 21/00, A22C 7/00

(54) **Hähnchenbrust-Teiler**
Chicken breast divider
Séparateur de blancs de poulet

(30) Priorität: 14.11.2005 DE 102005054241
(43) Veröffentlichungstag der Anmeldung: 16.05.2007
(73) Patentinhaber: Völkl, Thomas, 83052 Bruckmühl (DE)
(72) Erfinder: Völkl, Thomas, 83052 Bruckmühl (DE)
(74) Vertreter: Strych, Werner Maximilian Josef

(56) Entgegenhaltungen:
- WO-A-95/05084
- DE-A1- 3 314 762
- DE-A1- 3 540 904
- DE-A1- 19 938 051

## Beschreibung

### I. Anwendungsgebiet

Die Erfindung betrifft ein Verfahren sowie eine Vorrichtung zum Zerschneiden von Fleischstücken, insbesondere Hähnchen-Brüsten.

### II. Technischer Hintergrund

Im Normalfall hat eine Hähnchenbrust ein Gewicht von ca. 150 g, und stellt damit - zuzüglich des Gewichts der Panade - eine einzelne Fleischportion dar.

Bei derartigen Hähnchenbrüsten ist der für die Zerlegung des Hähnchens in die einzelnen Bestandteile benötigte Zeitaufwand - neben der Mast und dem Schlachten des Tieres - einer der bedeutenden Kostenfaktoren.

Daher sind Züchter inzwischen dazu übergegangen, annähernd doppelt so schwere Hähnchenbrüste zu züchten, und diese Hähnchenbrust anschließend in zwei Teile zu halbieren, wodurch sich der auf eine Portion entfallende Tranchieraufwand - abgesehen von dem zusätzlichen Halbierungsschnitt - auf die Hälfte reduzieren lässt.

Solange das Halbieren manuell erfolgt, wird dadurch ein Teil der Einsparung wieder zunichte gemacht.

Zerteilvorrichtungen für Fleischteile sind bekannt:

So beschreibt z. B. die DE 33 14 762 als auch die DE 199380 sowie die DE 35 40 904 eine Schneidemaschine, bei der ein unregelmäßig geformtes, jeweils unterschiedliches Fleischstück zunächst in einer Form mit Hilfe von Querstempeln und in der zweit genannten Schrift auch mit Hilfe von zusätzlichen Seitenstempeln in eine definierte Form gebracht wird, und anschließend hiervon Scheiben abgetrennt werden.

Zum einen handelt es sich dabei jedoch nicht um Fleischstücke mit der spezifischen Form von Hähnchenbrust-Teilen, zum anderen ist dort nicht eine exakte gewichtsmäßige Halbierung des Fleischstückes angestrebt.

Des Weiteren befinden sich dort lediglich die sogenannten Querstempel, deren Bewegungsrichtung quer zur Messerebene verläuft, beidseits der Messerebene, während sich ein oder mehrere Seitenschieber nur auf einer Seite der Messerebene befinden.

Darüber hinaus ist aus der WO 95/05084 auch eine Vorrichtung zum Behandeln von Hähnchenbrust-Teilen bekannt, bei der eine Form entsprechend diesem Fleischteil verwendet wird. Jedoch wird dort die Hähnchenbrust in der Form lediglich sicher aufgenommen, um sie anschließend automatisch mit einem Füllrohr anzustechen und mit einer Füllung im Inneren versehen zu können, wobei kein Zerschneiden der Hähnchenbrust angestrebt wird.

### III. Darstellung der Erfindung

### a) Technische Aufgabe

Es ist daher die Aufgabe gemäß der Erfindung, ein Verfahren und eine Vorrichtung zu schaffen, mit dem die unsymmetrisch geformte Hähnchenbrust zuverlässig und schnell in zwei etwa gleich große und vor allem einer handelsüblichen einportionigen, natürlich gewachsenen Hähnchenbrust in der Gestalt möglichst nahekommende Einzelteile zerlegt werden kann.

Angesichts der Tatsache, dass Hähnchenbrüste eine in der Aufsicht etwa birnenförmige, und in der Seitenansicht ebenfalls nicht symmetrische Grundform besitzen, und mit der Vorrichtung und dem Verfahren unterschiedlich große und schwere Hähnchenbrüste gehandhabt werden sollen, ist dies keine leichte Aufgabe.

### b) Lösung der Aufgabe

Diese Aufgabe wird durch die Ansprüche 1 und 8 gelöst. Vorteilhafte Ausführungsformen ergeben sich aus den Unteransprüchen.

Durch die Anordnung von Querstempeln in den Formhälften der Aufnahmeform auf bezüglich des Messers gegenüber liegenden Seiten kann das Volumen des Formhohlraumes auf jeder Seite des Messers definiert verändert werden, beispielsweise auch auf zwei gleich große Hälften eingestellt werden.

Indem zusätzlich ein Seitenschieber vorhanden ist, kann eine Anpassung der Abmessungen des Formhohlraumes auch in der anderen Richtung, also in Längsrichtung statt in Querrichtung der Stempel, vollzogen werden für beispielsweise unterschiedliche Ausgangsgrößen der Fleischstücke. Vorzugsweise sind dabei zwei Seitenschieber vorhanden, zwischen denen hindurch das Zerteilen mittels des Messers geschieht, wobei die Seitenschieber Durch die Ausbildung von Unterplatte/Oberplatte/Verschlussplatte und den Seitenschiebern als plattenförmige, parallel zueinander liegende Teile können diese quer zu ihrer Hauptebene auseinander gefahren werden zwecks besserer Zugänglichkeit und Reinigung, ohne den mechanischen Kontakt zu verlieren, indem sie entlang von Führungen verfahrbar ausgebildet sind. Eine Reinigung ist dadurch ohne aufwändige Demontagearbeiten notwendig.

Um die zwar qualitativ immer gleich geformten, aber unsymmetrischen, etwa tropfenförmigen Hähnchenschenkel unabhängig von ihrer Größe und dem eingestellten Formraumvolumen im Formhohlraum verpressen zu können, ohne dass Leerräume verbleiben und ohne dass das Fleischstück zu stark verformt werden muss, weist der Formhohlraum eine spezifische Formgebung auf:

Zumindest im Vertikalschnitt - wenigstens geschnitten entlang der Verschieberichtung des Seitenschiebers - ist der Formhohlraum mit schrägen, vorzugsweise parallel zueinander verlaufenden Seitenwänden und insbesondere parallelogrammförmig ausgebildet.

Ebenso ist der Formhohlraum in der Aufsicht betrachtet parallelogrammförmig ausgebildet, wobei die Verschieberichtung des Seitenschiebers, dessen Stirnfläche zwei aufeinander folgende Seiten des parallelogrammförmigen Umfanges darstellt, lotrecht zur festen Stirnwand des Parallelogramms verläuft.

Die Dicke und damit Höhe der horizontal liegenden Seitenschieber entspricht der Höhe der beiden Hälften des Formhohlraumes. Die Querstempel sind in der Oberseite und Unterseite des Formhohlraumes, also in der unteren Formplatte und der oberen Verschlussplatte, gelagert und können bis auf das Niveau der Außenseiten der Seitenschieber, aber nicht darüber hinaus, herangefahren werden, so dass die Stirnflächen der Seitenschieber die Pressflächen der Querstempel durchaus noch wenigstens teilweise überfahren können.

Die zu öffnende Oberseite des Formhohlraumes in der dort positionierten Verschlussplatte kann verschlossen werden, indem der obere Querstempel samt der ihn führenden Schieberplatte über die Öffnung des Formhohlraums verfahren und dann diese vom Querstempel verschlossen werden kann, der gegebenenfalls durch einen angrenzenden, an der Schieberplatte fest montierten, Verschlussklotz ergänzt wird.

Je nach Zerteilaufgabe werden die Beaufschlagungen der Querstempel und der Seitenschieber hinsichtlich Kraft, Weg und zeitlicher Abfolge von einer gemeinsamen Steuerung gesteuert, wobei die Betätigung aus hygienischen Gründen meist mittels Pneumatikzylindern erfolgt.

Aus den gleichen Gründen sind die Formteile der Aufnahmeform aus Kunststoff mit einer leicht zu reinigenden Oberfläche hergestellt, insbesondere gefräst, beispielsweise aus POM.

Als Zerteilvorrichtung wird vorzugsweise ein in sich starres, vorzugsweise einseitig auskragendes Messer verwendet, welches durch Relativbewegung zur Aufnahmeform das in der Aufnahmeform verpresste Fleischteil durch einen zu einer Seite hin offenen Messerspalt hindurch zerschneidet.

Für ein optimales Zerteilergebnis wird so vorgegangen, dass vor dem Einlegen des Fleischteiles die beweglichen Wandteile der Aufnahmeform, beispielsweise Querstempel und Seitenschieber, zurückgezogen werden, um ein größtmögliches Aufnahmevolumen entstehen zu lassen.

Die Einlegeöffnung steht offen, indem der diese verschließende Stempelschieber einschließlich des von ihm getragenen Querstempels aus der verschließenden in eine geöffnete Position verschoben ist.

Nach dem Einlegen des Fleischteiles wird die Einlegeöffnung durch den oberen Querstempel und den angrenzenden Verschlussblock verschlossen und die beweglichen Wandteile in Richtung Verkleinerung des Volumens des Formhohlraumes bewegt, bis das Fleischteil in der Aufnahmeform verpresst ist, ohne dass Hohlräume verbleiben. Nunmehr kann das Fleischstück zerteilt werden unter Erzeugung definierter Einzelvolumina der entstehenden Teile und damit definierter Einzelgewichte.

Wenn dabei die beiden Querstempel mit gleicher Kraft oder bis zur jeweils vorgegebenen, aber einander entsprechenden Axialposition verpresst werden, und auch die beiden Seitenschieber nur gemeinsam bewegt werden können, entstehen immer gleich große und gleich schwere Fleischstück-Hälften.

Wenn einer der Querschenkel und der zugehörige Seitenschieber auf eine definierte Position verfahren und die beiden anderen analogen Elemente mit einer definierten Kraft beaufschlagt werden, entsteht auf der Seite der definierten Positionierungen ein immer gleich großes und damit auch gleich schweres Fleischstück, während Volumen und Gewicht des Reststückes von der Ausgangsgröße des ganzen Fleischstückes abhängen.

Wenn mehrere solcher Aufnahmeformen hintereinander vorhanden sind und im Kreislauf an einem feststehenden Messer vorbeigeführt werden zum Zerteilen der Fleischstücke, können vor dem Messer die offenen Aufnahmeformen sehr schnell hintereinander mit Fleischstücken befüllt und eine hohe Durchsatzrate erzielt werden.

Besonders das Entnehmen der zerteilten Fleischstücke kann ohne Zeitverlust automatisch durchgeführt werden durch Abkippen der dann wieder geöffneten Aufnahmeformen am Ende des in einer Vertikalebene umlaufenden Förderbandes, auf dem die Aufnahmeformen fixiert sind, wodurch die zerteilten Stücke schwerkraftbedingt aus der Form fallen.

Die plattenförmigen Formteile sind vorzugsweise entlang von Führungen, die parallel zur Bewegungsrichtung der Querstempel verlaufen, zwischen einer Reinigungsstellung, in der sie zueinander beabstandet sind, und einer Funktionsstellung, in der sie aneinander angrenzend den Formhohlraum umschließen, verfahrbar.

Dadurch kann mit entsprechenden Antriebselementen, wie etwa Pneumatikzylindern, auf Knopfdruck die Reinigungsstellung angefahren und dann die Reinigung der gesamten Vorrichtung vollzogen werden.

### c) Ausführungsbeispiele

Ausführungsformen gemäß der Erfindung sind im Folgenden beispielhaft näher beschrieben. Es zeigen:
- Fig.1:: die Zerteilvorrichtung in perspektivischen Ansichten in unterschiedlichen Funktionsstellungen,
- Fig. 2:: die Aufnahmeform in Reinigungsstellung,
- Fig. 3:: die Aufnahmeform in Einlegestellung,
- Fig. 4:: die Aufnahmeform in verschiedenen Pressstellungen und
- Fig. 5:: den Formhohlraum in der Aufsicht

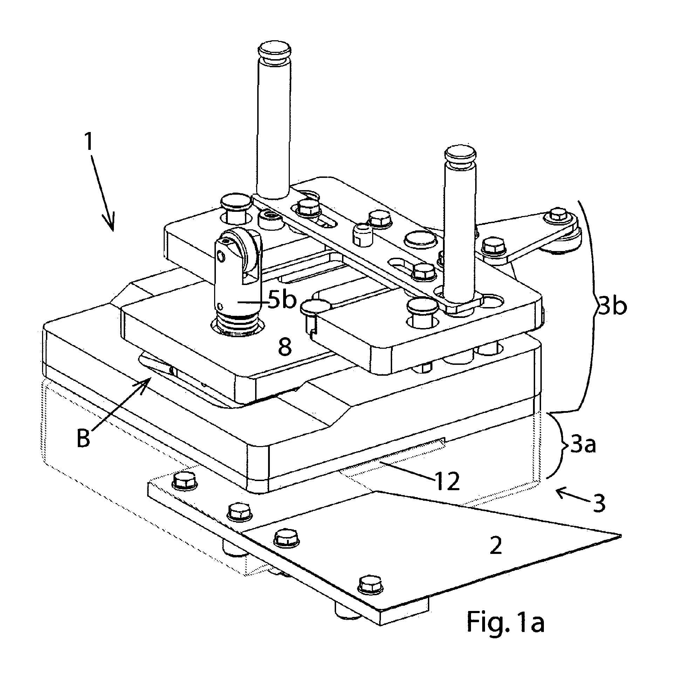

Fig. 1a zeigt die Zerlegevorrichtung 1 in perspektivischer Ansicht und in geschlossener Position, wobei der Übersichtlichkeit halber angrenzende Bauteile weggelassen wurden.

Die Zerlegevorrichtung 1 besteht aus einer Aufnahmeform 3, die aus einer unteren Formhälfte 3a und einer oberen Formhälfte 3b besteht, wobei die obere Formhälfte 3b wiederum aus mehreren Formteilen zusammengesetzt ist.

Ein plattenförmiges Messer 2 kann relativ zur Aufnahmeform 3 so verfahren werden, dass es durch den zur einen Seite hin offenen Messerspalt 12 hindurch soweit in die Aufnahmeform 3 hineinragt, dass es ein dort im Formhohlraum 13 untergebrachtes Fleischteil 20 zerschneidet.

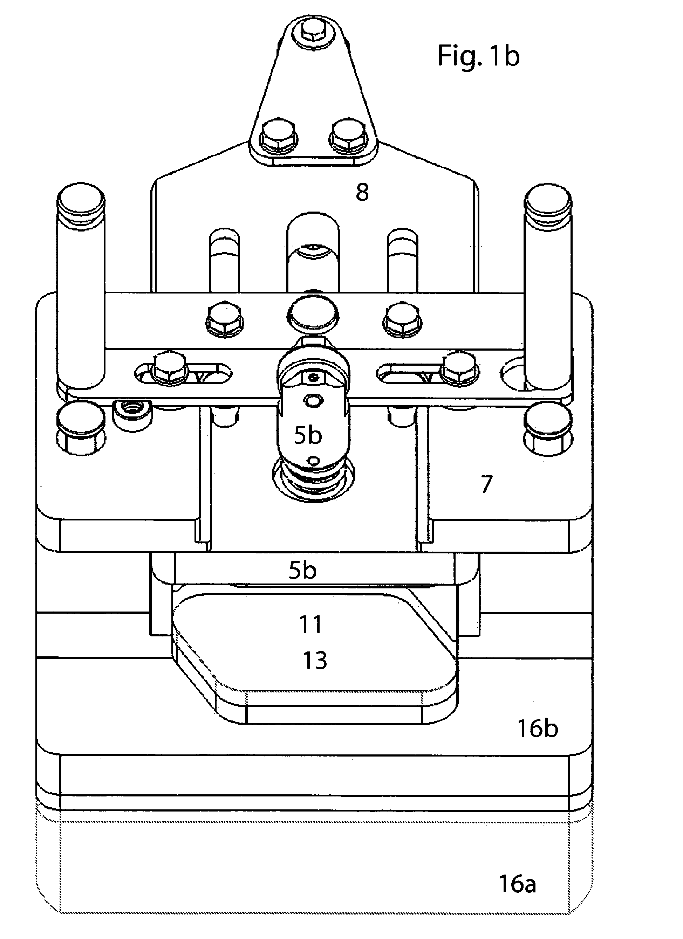

In Fig. 1b ist die Aufnahmeform 3 dargestellt in Blickrichtung B gemäß Fig. 1a, jedoch in einer anderen Funktionsstellung:

In Fig. 1b ist der Stempelschieber 8, indem der obere Querstempel 5b geführt ist, in der zurückgezogenen Position dargestellt, so dass durch die dann offene Einlegeöffnung 11 hindurch der Formhohlraum 13 im Inneren der Aufnahmeform 3 sichtbar wird.

Dabei ist ersichtlich, dass dieser Formhohlraum 13 in der Aufsicht betrachtet die Form eines Trapezes aufweist.

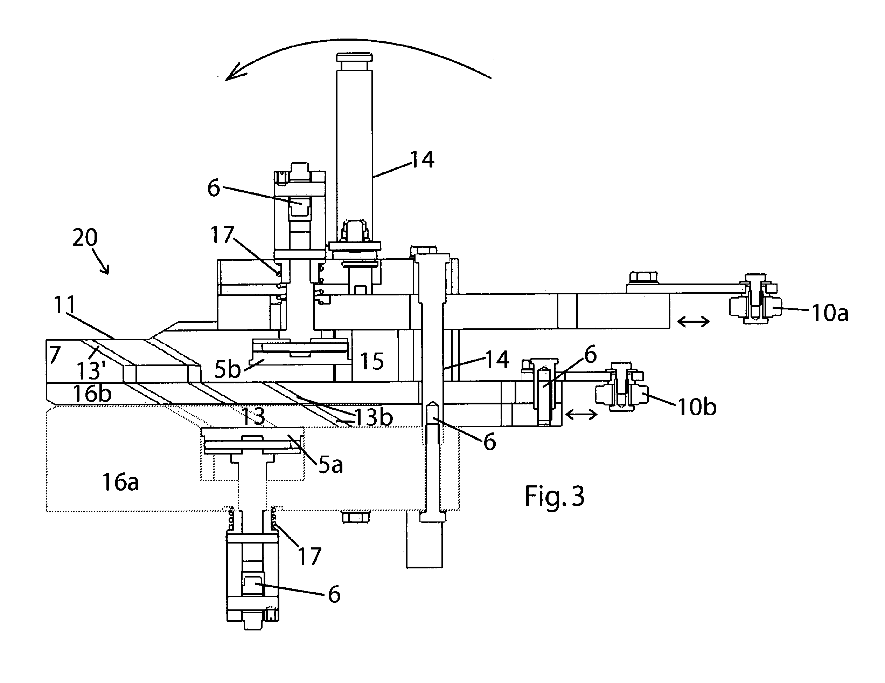

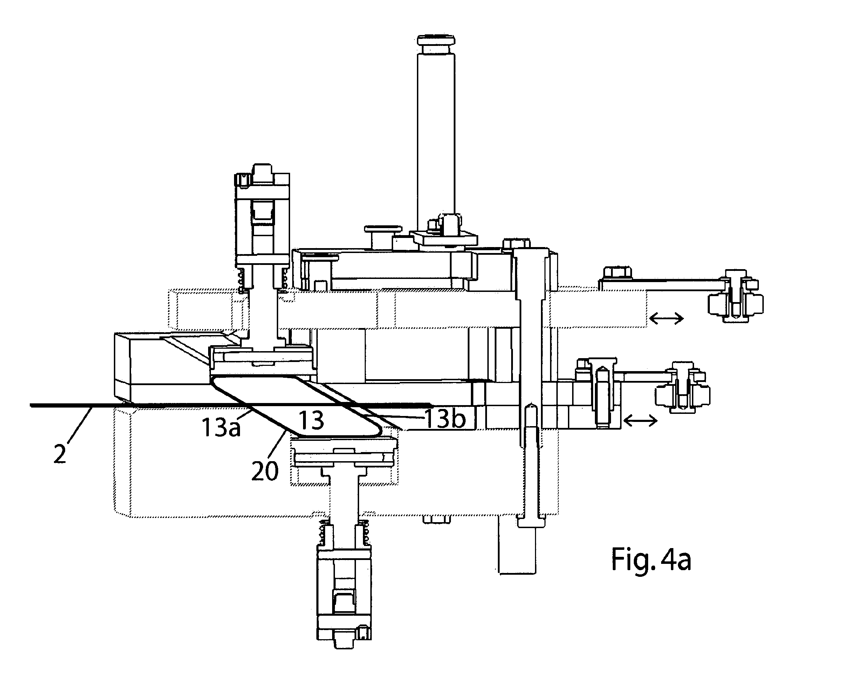

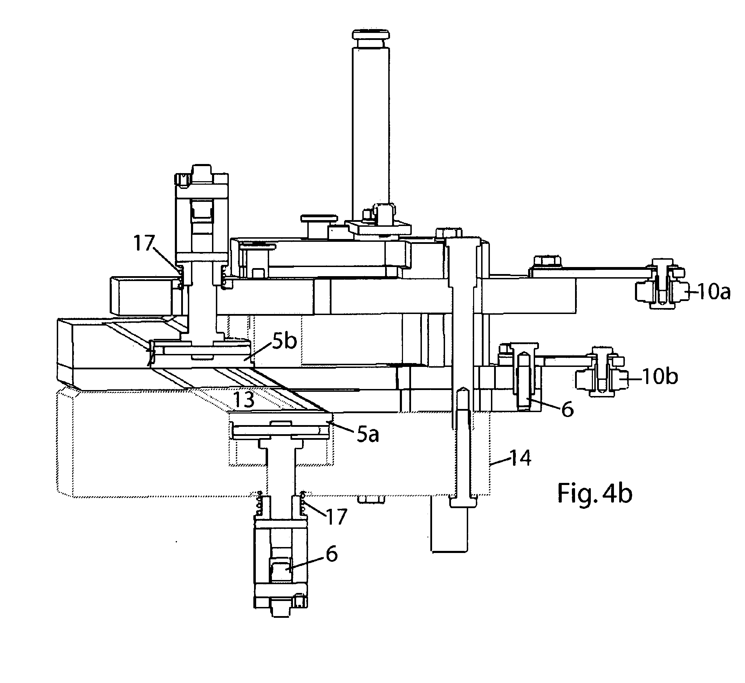

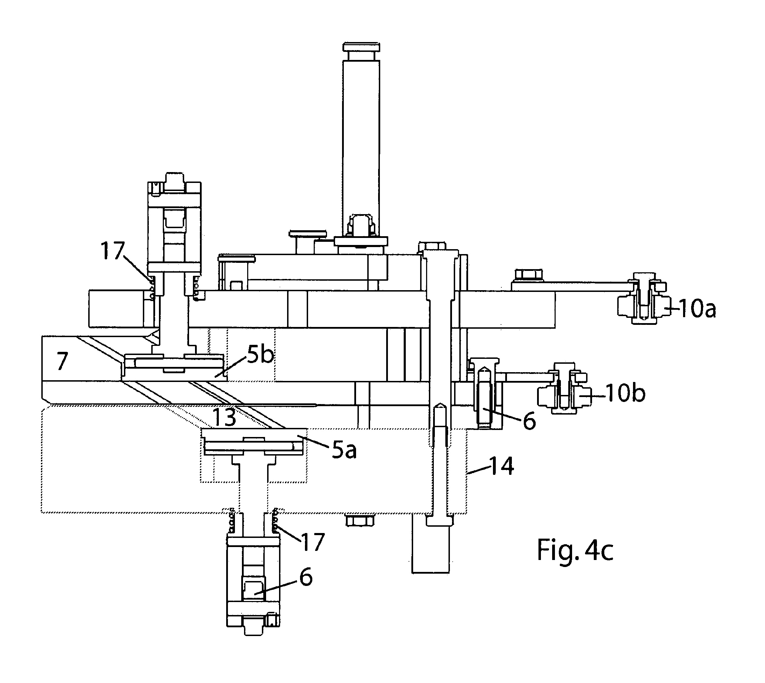

Wie ferner anhand der folgenden vertikalen Schnittdarstellungen vor allem der Fig. 3 und 4 zu erkennen, ist zusätzlich oder stattdessen der Formhohlraum 13 auch im Vertikalschnitt betrachtet parallelogrammförmig mit horizontaler Ober- und Unterseite und schrägen Seitenwänden 13a, b, wie am besten anhand der Fig. 4a zu erkennen, in der als einzige Darstellung ein im Formhohlraum 13 verpresstes Fleischteil 20 dargestellt ist.

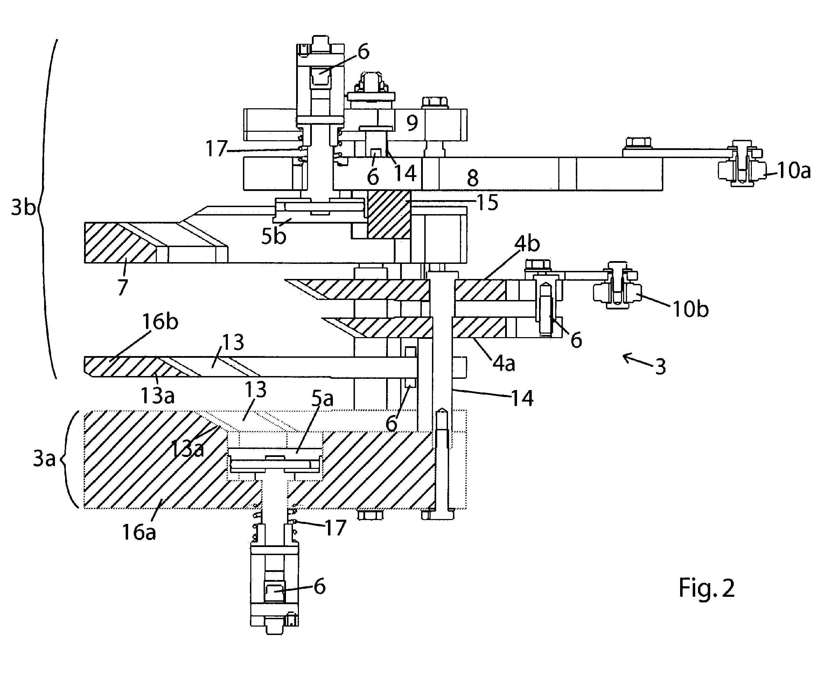

Die Einzelteile der Form, insbesondere der oberen Formhälfte 3b, lassen sich am einfachsten mit Blick auf Fig. 2 voneinander unterscheiden, welche die Reinigungsstellung zeigt, in der die einzelnen Formteile auf Abstand zueinander gefahren sind, und auf die später eingegangen wird.

Fig. 3 zeigt im Vertikalschnitt die Einlegestellung gemäß der perspektivischen Fig. 1b, in der der Formhohlraum 13 von oben her über eine noch nicht verschlossene Einlegeöffnung 11 zugänglich ist, so dass ein Fleischteil 20 vorzugsweise eine Hähnchenbrust, in den Formhohlraum 13 eingelegt werden kann.

Dabei ist das Volumen des Formhohlraumes 13 variabel, indem einige der Formteile gegen den Formhohlraum 13 mehr oder weniger weit vorgeschoben werden können.

Das Ziel besteht darin, den Formhohlraum 13 so zu gestalten und auch zu dimensionieren, dass eine solche Hähnchenbrust als Fleischteil 20, die unsymmetrisch, aber qualitativ immerhin etwa gleich geformt sein wird, auf einfache Art und Weise und ohne Fehlermöglichkeit in den Formhohlraum eingelegt und anschließend darin so verpresst werden kann, dass der Formhohlraum 13 vollständig von dem Fleischteil 20 ausgefüllt wird.

Dies ist notwendig, um in dem dann definierten Volumen des Formhohlraumes 13 an definierter Stelle einen Trennschnitt setzen zu können, denn nur dadurch ist es möglich, das Fleischteil 20, z. B. die ursprünglich unsymmetrisch geformte Hähnchenbrust, entweder in zwei gleich große und damit gleich schwere Hälften zu teilen oder in zwei Teile, von denen eines ein immer konstantes Volumen und damit konstantes Gewicht aufweist, während der verbleibende Teil in seinem Volumen und Gewicht variiert entsprechend der Ausgangsgröße des Fleischteiles 20.

Zu diesem Zweck muss das Fleischteil 20 natürlich verformbar und damit entsprechend elastisch sein, also sich im Rohzustand und nicht in einem z. B. gefrorenen Zustand befinden.

Wie am besten die mit Schraffuren ausgestatteten Darstellungen der Fig. 2 erkennen lassen, umfasst die Aufnahmeform 3 eine untere Formplatte 16a, die gleichzeitig die untere Formhälfte 3a bildet, und in deren Oberseite die wannenförmige untere Hälfte des späteren Formhohlraumes 13 ausgebildet ist.

Diese umfasst eine schräg verlaufende Wand 13a t, während die dieser Wand 13a gegenüberliegende Seitenwand fehlt. Diese fehlende Wand wird später von der analog schräg stehenden Stirnfläche des plattenförmigen unteren Seitenschiebers 4a gebildet, dessen Höhe der Höhe der Formausnehmung in der unteren Formplatte 16a entspricht, und die in der Reinigungsstellung der Fig. 2 von der Formplatte 16a deutlich nach oben abgehoben ist, während sie in den Fig. 3 und 4 in deren oberer Ausnehmung liegt, so dass die Oberseiten von unterer Formplatte 16a und unterem Seitenschieber 4a miteinander fluchten.

Die Aufnahmeform 3 wird nach oben fortgesetzt durch eine in dem geschlossenen Zustand, also in den Fig. 3 und 4, auf der Oberseite der unteren Formplatte 16a aufliegenden oberen Formplatte 16b, die ebenfalls einer horizontal liegenden Platte mit einem in der Aufsicht U-förmigen, nach rechts offenen, Querschnitt besitzt.

Der obere Seitenschieber 4b, der ebenfalls plattenförmig ist und die gleiche Dicke besitzt, passt genau zwischen die beiden Schenkel der oberen Formplatte 16b und kann in die U-förmige Ausnehmung nach links hinein geschoben oder aus dieser mehr zurückgezogen werden, wodurch sich der freie Querschnitt der von oben nach unten durchgehenden Öffnung in der Formplatte 16b, welche später die obere Hälfte des Formhohlraumes 13 bildet, verändert.

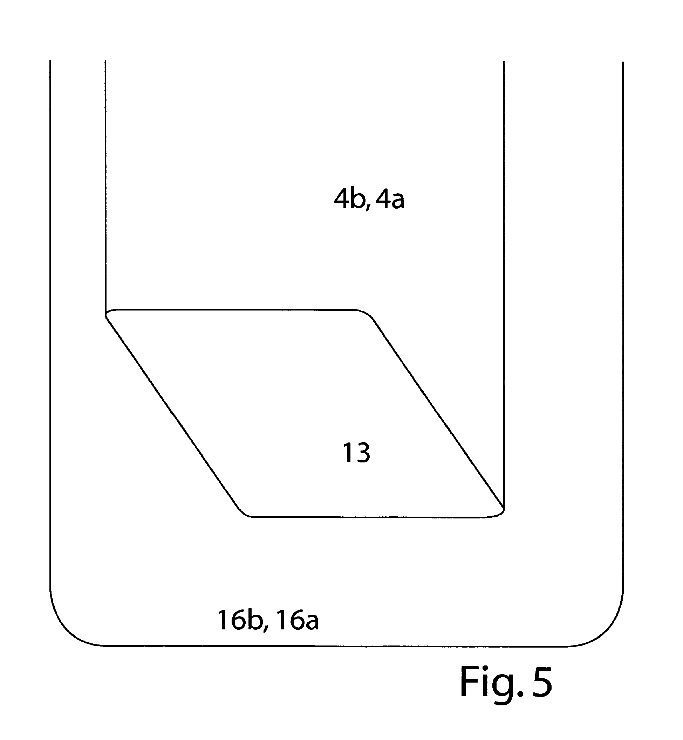

Das Zusammenwirken der beiden Teile und die spezifische Form werden später anhand der Fig. 5 erläutert.

Wenn die Formplatten 16a, b aufeinander liegen - mit dem dazwischen belassenen horizontalen Messerspalt 12 zum Durchziehen des Messers 2, welches nur in der Fig. 4a dargestellt ist - fluchten die schrägen Wände 13a der beiden Formplatten 16a und b miteinander und ebenso deren übrige Seitenwände.

Auf dieser dann offenen Oberseite des Formhohlraumes 13 liegt - sowohl in der Einlegestellung gemäß Fig. 3 als auch in der Pressstellung gemäß Fig. 4 - die Verschlussplatte 7 auf, die in der Aufsicht betrachtet ebenfalls wiederum U-förmig gestaltet ist und am inneren Ende der U-förmigen Ausnehmung eine Wandfläche 13' aufweist, die mit der Wand 13a von unterer und oberer Formplatte 16a, b fluchtet.

Die Wandfläche 13' ist im unteren Bereich lotrecht zur Hauptebene der Verschlussplatte 7 angeordnet, und im Bereich darüber wiederum schräg verlaufend in der gleichen Schrägstellung wie die Wand 13a in den darunter liegenden Formplatten.

Die offene Seite der in der Aufsicht U-förmigen Aussparung der Verschlussplatte 7 wird verschlossen durch den in den Fig. 3 und 4 von links nach rechts verschiebbaren Stempelschieber 8, an dessen Unterseite einerseits ein Verschlussklotz 15 befestigt ist, der die offene Seite der U-förmigen Aussparung verschließt, und dem ein quer zur Hauptebene der plattenförmigen Formteile verfahrbarer oberer Querstempel 5b vorgelagert ist, der später einen Teil der Oberseite der Aufnahmeform 3 bildet.

In der Einlegestellung gemäß Fig. 3 ist dieser Stempelschieber 8 soweit nach rechts zurückgezogen, dass zwischen der Wand 13' und dem oberen Querstempel 5b ausreichend Platz zum Einführen eines Fleischteiles 20 von oben durch die Einlegeöffnung 11 der Verschlussplatte 7 hindurch in den Formhohlraum 13 verbleibt.

Ebenso ist in der unteren Formplatte 16a ein dem oberen Querstempel 5b entgegengerichteter, vorzugsweise analog gleicher unterer Querstempel 5a angeordnet, der einen Teil der Unterseite der Aufnahmeform 3 bildet.

Die Querstempel 5a, b sind mittels Federn 17 in Richtung der vom Formhohlraum 13 am weitesten zurückgezogenen Position vorgespannt.

Die Verschiebebewegungen des Stempelschiebers 8 sowie der beiden Seitenschieber 4a, b horizontal, also quer zur Betätigungsrichtung der Stempel 5a, b, erfolgt über Steuerrollen 10a, b an dem vom Messer 2 abgewandten Ende, die von nicht dargestellten Steuerkulissen betätigt werden.

Mit dieser Zerteilvorrichtung lässt sich wie folgt arbeiten:

In der Einlegestellung gemäß Fig. 3 ist die Aufnahmeform 3 bereits weitest gehend geschlossen, indem die beiden Formplatten 16a, b sowie die Verschlussplatte 7 aufeinander liegen, und die Aufnahmeform 3 lediglich noch durch die Einlegeöffnung 11 von oben her zugänglich ist.

In dieser Einlegestellung, in der die Hauptebene der Platten horizontal positioniert ist, wird das zu zerteilende Fleischteil 20 in den Formhohlraum 13 eingelegt.

Die beiden Seitenschieber 4a, b, deren Flächen als Seitenwände 13b ebenfalls miteinander fluchten und parallel zur gegenüberliegenden schrägen Seitenwand 13a verlaufen, befinden sich dabei in der am weitesten aus dem Hohlraum 13 zurückgezogenen Position.

Der untere Querstempel 5a befindet sich in der am weitesten gegen den Hohlraum 13 vorgeschobenen Position, in der seine Pressfläche mit der Unterseite des unteren Seitenschiebers 4b fluchtet, wenn das Fleischteil 20 eingelegt wird, damit das Fleischteil 20 über die dann durchgehend ebene Unterseite des Hohlraumes 13 bis in das spitzwinkelige, in Fig. 3 rechte, Ende des im Querschnitt trapezförmigen Hohlraumes gleiten kann, ohne an einem Absatz oder einer Kante hängen zu bleiben.

Anschließend wird der untere Querstempel 5a vom Formhohlraum 13 soweit wie möglich zurückgezogen.

Zum Einnehmen der Pressstellung wird der Stempelschieber 8 nach links in Richtung Einlegeöffnung 11 verschoben, bis der obere Querstempel 5b am lotrechten Teil der Wandung 13' in der Verschlussplatte 7 anliegt, wodurch die aus Unterseite der Verschlussplatte 7, Pressfläche des oberen Querstempels 5b und Unterseite des sich hinter dem Querstempel 5b anschließenden Verschlussklotzes 15 eine durchgehende, die obere Öffnung des Formhohlraumes 13 verschließende, durchgehende Fläche darstellt.

Anschließend werden zum Verpressen des Fleischteiles 20 die beiden Querstempel 5a, b mit Kraft gegen das Fleischteil 20 beaufschlagt, je nach gewünschtem Zerteilungs-Ergebnis:

Wenn das Fleischteil 20 in zwei gleich große und damit gleich schwere Hälften zerteilt werden soll, werden die beiden Querstempel 5a, b entweder mit gleicher Kraft beaufschlagt oder bis zu einander entsprechenden, analogen Axialpositionen vorwärts geschoben.

Dies bewirkt, dass dann oberhalb und unterhalb des Messerspaltes 12, also der Messerebene, jeweils ein gleich großes Volumen an Formhohlraum vorhanden ist, aufgrund übereinstimmender Dicke des oberen und unteren Seitenschiebers 4 und auf allen Höhenniveaus gleich großer Querschnittsfläche des Formhohlraumes 13.

Zusätzlich wird - vorzugsweise anschließend - der Seitenschieber 4, also dessen beide Teile 4a und b, gemeinsam - siehe Fig. 4 - von rechts nach links vorwärts geschoben, indem der Seitenschieber 4 mit einer definierten Kraft beaufschlagt wird, die ausreicht, damit das Fleischteil 20 sich so stark verformt, dass es den Formhohlraum 13 optimal ausfüllt, aber das Gewebe des Fleischteiles 20 nicht nachteilig verändert oder gar zerstört wird.

Falls wie beschrieben die Querstempel 5a, b auf eine definierte Axialposition vorgefahren werden, so ist diese Sollposition zumindest in Stufen, vorzugsweise stufenlos, einstellbar, die in Abhängigkeit von dem Sollgewicht bzw. der Sollgröße der zu verarbeitenden Fleischteile 20 gewählt wird.

Bei ein und derselben Istposition der Querstempel 5a, b wie beispielsweise in den Fig. 4b und 4c dargestellt - bei denen jeweils ihre Pressfläche mit den Oberseiten bzw. Unterseiten der jeweiligen Seitenschieber 4 fluchtet - kann das Volumen des Formhohlraumes zusätzlich durch die Verschiebeposition des Seitenschiebers 4 verändert werden, der in Fig. 4c weiter eingeschoben ist als in Fig. 4b, in Anpassung an die Ausgangsgröße des Fleischteiles 20.

Vor allem Figur 4c zeigt, dass die Querstempel 5a, b niemals in den Höhenbereich der Seitenschieber 4a, b vorstehen dürfen, da diese mit ihren vorderen Stirnfläche durchaus die Pressflächen der Querstempel 5a, b teilweise überlaufen können.

Ein anderer Anwendungsfall besteht darin von den unregelmäßig großen Hähnchenbrüsten jeweils eine Portion mit einem bestimmten Sollgewicht und somit einem bestimmten Sollvolumen abzutrennen.

Wenn dies das Teil unterhalb der Messerebene sein soll, werden zu diesem Zweck der untere Querstempel 5a sowie der Seitenschieber 4 immer beim Verpressen auf eine vorgegebene Sollposition verfahren, während der obere Querstempel 5b mit einer definierten Kraft beaufschlagt ist, die ausreicht, um eine möglichst perfekte Anpassung des Fleischteiles 20 an den Formhohlraum 13 zu erreichen.

Nach dem Zerteilen wird der obere Querstempel wieder axial zurückgezogen und anschließend der gesamte Stempelschieber 8 nach rechts verlagert, also die Einlegeposition gemäß Figur 3 eingenommen.

Durch Kippen der gesamten Aufnahmeform 3, so dass die Einlegeöffnung 11 nun nach unten zeigt, fallen die beiden auseinander geschnittenen Teile des Fleischstückes 20 schwerkraftbedingt nach unten heraus, was durch ein Vorwärtsschieben des dann oben liegenden Querstempels 5a unterstützt werden kann.

Fig. 5 zeigt in der Aufsicht von oben die U-förmig ausgesparte Formplatte 16a bzw. 16b und den die offene Seite der U-förmigen Aussparung dicht verschließenden jeweiligen Seitenschieber 4a bzw. 4b.

In der dargestellten Position befindet sich der Seitenschieber 4a bzw. b in der am weitesten in die U-förmige Aussparung hinein vorgeschobenen Position, in der der verbleibende Formhohlraum 13 die Form eines Parallelogramms aufweist. Dabei werden zwei aneinander angrenzende Seiten des parallelogrammförmigen Umfanges von dem Ende der U-förmigen Aussparung in der Formplatte gebildet, während die beiden übrigen Seiten durch die Stirnfläche des entsprechenden Seitenschiebers 4a, b gebildet werden, dessen Breite genau der Breite der U-förmigen Aussparung in der Formplatte 16a, b entspricht. Von dieser Position aus kann der Seitenschieber 4a, b weiter nach hinten zurückgezogen werden, wodurch sich der in Fig. 5 noch trapezförmige Querschnitt des Formhohlraumes 13 zu einem immer länglicher werdenden Sechseck verformt.

Diese Formgebung in der Aufsicht - und die analoge Formgebung im Vertikalschnitt - ist optimal, um ein unsymmetrisch tropfenförmiges Fleischteil wie eine Hähnchenbrust aufzunehmen und anschließend hohlraumfrei zu verpressen.

Vorteilhafterweise besteht eine Zerteilanlage aus mehreren Aufnahmeformen 3, die hintereinander auf einer Art Förderband montiert sind und an einem feststehenden Messer 2 vorbeifahren, anschließend am Ende des Förderbandes kippen, indem sie die Umlenkrolle umlaufen und entlang des Untertrummes dieses Förderbandes wieder zurück zum Befüllort laufen.

Dadurch ist es auch möglich die Antriebselemente für die einzelnen Formteile nur einmal vorzusehen, indem beispielsweise die Steuerrollen 10a, b durch stationär installierte, schräg zur Verlaufsrichtung stehende Steuerkulissen beaufschlagt werden.

Um die Hygienevorschriften für die hier vorliegende Verarbeitung von rohem Fleisch jederzeit mit geringem Aufwand erfüllen zu können, muss die Vorrichtung, insbesondere die Aufnahmeform 3 am Ende jedes Arbeitstages oder gar am Ende jedes Loses einfach und gründlich gereinigt werden können.

Zu diesem Zweck sind - wie am besten Figur 2 in der Reinigungsstellung zeigt - die plattenförmigen Formteile auf Führungen in Richtung der Verschieberichtung der Querstempel 5a, b verschiebbar angeordnet und können in die in Figur 2 dargestellte, jeweils zueinander beabstandete Reinigungsposition verfahren werden, was mit zwischen den Formteilen angeordneten Pneumatikzylindern 6 erfolgt.

Lediglich durch Ansteuern dieser Pneumatikzylinder 6, und ohne dass eine manuelle Demontage irgendwelcher Einzelteile erfolgen muss, nehmen die einzelnen Formteile die zueinander beabstandete Reinigungsstellung ein, in der sie mittels Hochdruckreiniger oder auf andere Art und Weise leicht gereinigt werden können.

Auch die Querstempel 5a, b sind auf einfache Art und Weise aus ihren Führungen entfernbar. Das Beaufschlagen der Querstempel in ihre vorgeschlagene Position entgegen der Kraft der Federn 17 erfolgt ebenfalls mittels Pneumatikzylindern 6.

### BEZUGSZEICHENLISTE

- 1: Zerteilvorrichtung
- 2: Messer
- 3: Aufnahmeform
- 3a, b: Form-Hälfte
- 4a, b: Seitenschieber
- 5a, b: Querstempel
- 6: Pneumatikzylinder
- 7: Verschlussplatte
- 8: Stempelschieber
- 9: Führungsplatte
- 10a, b: Steuerrolle
- 11: Einlegeöffnung
- 12: Messerspalt
- 13: Formhohlraum
- 13a, b: Wand
- 14: Führung
- 15: Verschlussklotz
- 16a, b: Formplatte
- 17: Feder
- 20: Fleischteil

## Patentansprüche

1. Zerteilvorrichtung (1) mit
- einem Messer (2) und
- einer Aufnahmeform (3), die aus einer unteren Formhälfte (3a) und einer oberen Formhälfte (3b) besteht und dazwischen einen Formhohlraum (13) aufweist für das zu zerteilende Fleischteil (20), wobei die Aufnahmeform (3),
- eine untere Formplatte (16a), und eine obere Formplatte (16b) als Formteile umfasst,
- einem dazwischen belassenen Messerspalt (12) zum Durchziehen des Messers (2), wobei
- die obere Formplatte (16b) oben offen und von einer Verschlussplatte (7) verschließbar ist, **dadurch gekennzeichnet, dass**
- zwei Querstempel (5a, b) auf einander gegenüberliegenden Seiten des Messers (2) in den Formhälften (3a, b), nämlich in der unteren Formplatte (16b) und in der oberen Verschlussplatte (7), angeordnet und quer zur Hauptebene der plattenförmigen Formteile (16a, b) verfahrbar sind,
- die obere Verschlussplatte (7) ihrerseits eine Durchgangsöffnung in Richtung Formhohlraum (13) als Einlegeöffnung (11) aufweist, die von dem oberen Querstempel (5b) verschließbar ist durch Verfahren eines Stempelschiebers (8) über die Einlegeöffnung (11), in der der obere Querstempel (5b) geführt ist,
- zwei Seitenschieber (4a, b) im Höhenbereich der oberen und unteren Formplatte (16a, b) anordenbar und quer zur Bewegungsrichtung der Querstempel (5a, b) verfahrbar sind, deren Höhe der Höhe der beiden Hälften des Formhohlraumes (13) entspricht und die eine Seitenwand davon bilden, und
- zum Zwecke der Reinigung der Zerteilvorrichtung die Formteile quer zu ihrer Hauptebene auf Abstand auseinander gefahren werden können, ohne den mechanischen Kontakt zueinander zu verlieren.

2. Zerteilvorrichtung (1) nach einem der vorhergehenden Ansprüche,
**dadurch gekennzeichnet, dass**
der Formhohlraum (13) in wenigstens einer Schnittdarstellung schräg zu den angrenzenden Seitenflächen verlaufende, insbesondere parallel zueinander verlaufende Wände (13a, B) aufweist und insbesondere der Querschnitt ein Parallelogramm bildet.

3. Zerteilvorrichtung (1) nach einem der vorhergehenden Ansprüche,
**dadurch gekennzeichnet, dass**
die obere Verschlussplatte (7) ihrerseits eine Durchgangsöffnung in Richtung Formhohlraum (13) als Einlegeöffnung (11) aufweist, die von dem oberen Querstempel (5b) sowie einem daran anschließenden Verschlussklotz (15) verschließbar ist.

4. Zerteilvorrichtung (1) nach einem der vorhergehenden Ansprüche,
**dadurch gekennzeichnet, dass**
der Stempelschieber (8) parallel zu den Seitenschiebern (4 bzw. 4a, b) verschiebbar ist.

5. Zerteilvorrichtung (1) nach einem der vorhergehenden Ansprüche,
**dadurch gekennzeichnet, dass**
die Zerlegevorrichtung eine Steuerung umfasst, die unterschiedliche Zerteilprogramme enthält für z. B. einerseits das möglichst genaue Halbieren des Fleischteiles oder andererseits die möglichst genaue Einhaltung eines Sollgewichts einer der beiden Hälften des Fleischteiles (20).

6. Zerteilvorrichtung (1) nach einem der vorhergehenden Ansprüche,
**dadurch gekennzeichnet, dass**
die Formteile aus Kunststoff, insbesondere aus POM bestehen.

7. Zerteilvorrichtung (1) nach einem der vorhergehenden Ansprüche,
**dadurch gekennzeichnet, dass**
als Antriebselement zum Annähern bzw. Beabstanden der Formteile zueinander Pneumatikzylinder (6) verwendet werden.

8. Verfahren zum Zerteilen eines in einer Aufnahmeform (3), deren Wände zur Veränderung des Volumens der Aufnahmeform (3) teilweise verlagerbar sind, eingeschlossenen Fleischteiles (20) mittels eines Messers (2) mit folgenden Schritten:
- Zurückziehen der beweglichen Wandteile der Aufnahmeform (3) in Form zweier gegeneinander gerichteter Querstempel (5a, b) in zwei gegenüberliegenden Wänden des Formhohlraumes (13) der Aufnahmeform (3), so dass das größtmögliche Volumen entsteht,
- Einlegen des Fleischteiles (20),
- Verschließen der Einlegeöffnung (11) der Aufnahmeform (3),
- Vorwärtsbewegen der beweglichen Wandteile in Richtung Verkleinerung des Volumens bis das Fleischteil (20) so in der Aufnahmeform (3) verpresst ist, dass keine Hohlräume zwischen Fleischteil (20) und Aufnahmeform (3) mehr vorliegen und
- Zerteilen des Fleischstückes (20) im verpressten Zustand
**dadurch gekennzeichnet, dass**
- zur Erzielung von zwei gleich schweren Hälften des Fleischteiles (20) die beiden Querstempel (5a, b) mit gleicher Kraft oder bis zur jeweils vorgegebenen, einander entsprechenden, Axialpositionen beim Verpressen in Richtung Fleischteil (20) vorwärts gefahren werden, und
- zur Erzielung einer immer gleich schweren Hälfte des Fleischteiles (20) einer der Querstempel (5a) bis zu einer definierten Position und der andere Querstempel (5b) mit einer definierten Anpresskraft zum Verpressen des Fleischteiles (20) beaufschlagt wird.

9. Verfahren nach einem der vorhergehenden Verfahrensansprüche,
**dadurch gekennzeichnet, dass**
- beim Einlegen des Fleischteiles (20) in die Aufnahmeform (3) sich der untere Querstempel (5a) in der am weitesten gegen den vom Hohlraum (13) vorgeschobenen Position befindet, damit das Fleischteil (20) über die dann durchgehend ebene Unterseite des Formhohlraumes (13) gleiten kann, ohne an einem Absatz oder einer Kante hängen zu bleiben, und
- anschließend der untere Querstempel (5a) soweit wie möglich vom Hohlraum (13) zurückgezogen wird.

10. Verfahren nach einem der vorhergehenden Verfahrensansprüche,
**dadurch gekennzeichnet, dass**
die Einlegeöffnung (11) verschlossen wird durch Verschieben eines der Querstempel (5b) über die Einlegeöffnung (11), insbesondere zusammen mit einem randseitigen Verschlussklotz (15).

11. Verfahren nach einem der vorhergehenden Verfahrensansprüche,
**dadurch gekennzeichnet, dass**
zum Verändern des Volumens zwei quer zur Bewegungsrichtung der Querstempel (5a, b) verfahrbare, auf je einer Seite der Ebene des Messers (2) angeordnete, Seitenschieber (4) verfahren werden.

12. Verfahren nach einem der vorhergehenden Verfahrensansprüche,
**dadurch gekennzeichnet, dass**
die Seitenschieber (4a, b) gleichzeitig oder anschließend an die Querstempel (5a, b) gemeinsam mit einer definierten Kraft vorwärts geschoben werden.

13. Verfahren nach einem der vorhergehenden Verfahrensansprüche,
**dadurch gekennzeichnet, dass**
zum Entnehmen der zerteilten Fleischteile (20) die Einlegeöffnung (11) geöffnet, und nach Zurückziehen der beweglichen Wandteile in Richtung großes Volumen der Aufnahmeform (3), und die Aufnahmeform (3) so gedreht wird, dass die Fleischteile schwerkraftbedingt herausfallen, gegebenenfalls unterstützt durch den dann von oben nach unten wirkenden einen Querschieber (5a).

14. Verfahren nach einem der vorhergehenden Verfahrensansprüche,
**dadurch gekennzeichnet, dass**
nach dem Zerlegen des letzten Fleischteiles einer Charge alle Einzelteile der Aufnahmeform (3) auf Abstand zueinander auseinander bewegt, aber dennoch fest miteinander verbunden bleiben für das Durchführen eines Reinigungsschrittes.

15. Verfahren nach einem der vorhergehenden Verfahrensansprüche,
**dadurch gekennzeichnet, dass**
die quer zur Querstempelrichtung verfahrbaren Bauteile, insbesondere Stempelschieber (8) und Seitenschieber (4), mittels Kulissensteuerung verschoben werden und die Kulissen insbesondere mittels Pneumatikzylindern (6) bewegt werden.

## Claims

1. A divider (1) with
- a cutting blade (2);
- a receiver mold (3) comprised of a lower mold half (3a) and an upper mold half (3b), and a mold cavity (13) there between for the piece of meat (20) to be divided, where the receiver mold (3) comprises a lower mold plate (16a) and an upper mold plate (16b) as mold components; and
- a cutting blade gap (12) remaining there between for pulling the cutting blade (2) through, where
- the upper the upper mold plate (16b) is open on top and closable by a closure plate (7), wherein
- two transversal dies (5a, b) are disposed on opposite sides of the cutting blade (2) in the mold halves (3a, b), namely in the lower mold plate (16b) and in the upper closure plate (7), and movable transversally to the main plane of the plate shaped mold components (16a, b);
- the upper closure plate (7) in turn comprises a pass-through opening towards the mold cavity (13) as an insertion opening (11), which can be closed by the upper transversal die (5b) by moving a die slide (8) over the insertion opening (11), in which the upper transversal die (5b) is guided,
- two lateral slides (4a, b) can be arranged in the elevation range of the upper and lower mold plate (16a, b) and movable transversally to the movement direction of the transversal dies (5a, b), whose height corresponds to the height of the two halves of the mold cavity (13) and which form a side wall thereof, and
- the mold components can be moved apart from one another transversally to the main plane, so they are at a distance from one another, in order to clean the divider without losing the mechanical contact with one another.

2. A divider (1) according to one of the preceding claims, wherein the mold cavity (13) at least in a sectional view comprises walls (13a, b), extending at a slant angle to the adjacent lateral surfaces, which walls extend in particular parallel to one another, and the cross section of the mold cavity forms a parallelogram in particular.

3. A divider (1) according to one of the preceding claims, wherein the upper closure plate (7) in turn comprises a pass-through opening towards the mold cavity (13) as an insertion opening (11), which can be closed by the upper transversal die (5b) and a closure block (15) adjacent thereto.

4. A divider (1) according to one of the preceding claims, wherein the die slide (8) is movable in parallel with the lateral slides (4 or 4a, b).

5. A divider (1) according to one of the preceding claims, wherein the divider comprises a control which includes different dividing programs, e.g. for precise halving of a piece of meat (20) or for precise maintenance of the target weight of one of the two halves of the piece of meat (20).

6. A divider (1) according to one of the preceding claims, wherein the mold components are made of plastic, in particular POM.

7. A divider (1) according to one of the preceding claims, wherein pneumatic cylinders (6) are used as a drive element for approaching or offsetting the molded components relative to one another.

8. A method for dividing a piece of meat (20) through a cutting blade (2), which piece of meat is enclosed in a receiver mold (3), whose walls are partially movable for changing the volume of the receiver mold (3), comprising the following steps:
- pulling back the movable wall components of the receiver mold (3) configured as two transversal dies (5a, b) facing one another in two opposite walls of the mold cavity (13) of the receiver mold (3), so that the largest possible volume is created;
- inserting the piece of meat (20);
- closing the insertion opening (11) of the receiver mold (3);
- forward movement of the moving wall components towards a reduction of the volume until the piece of meat (20) is pressed into the receiver mold (3), so that no cavities are present anymore between the piece of meat (20) and the receiver mold (3);
- dividing the piece of meat (20) in compressed state; wherein
- the two transversal dies (5a, b) are moved forward towards the piece of meat (20) in order to obtain two halves of the piece of meat (20) with identical weight, where the forward movement is performed with the same force or up to the respectively predetermined mutually corresponding axial positions during compression; and
- in order to obtain a half of the piece of meat (20) with constant weight, one of the transversal dies (5a) is loaded up to a defined position and the other transversal die (5b) is loaded with a defined compression force for compressing the piece of meat (20).

9. A method according to one of the preceding method claims, wherein
- the lower transversal die (5a) is disposed in the most forward position towards the cavity (13) during insertion of the piece of meat (20) into the receiver mold (3), so that the piece of meat (20) can then slide over a continuously flat bottom side of the mold cavity (13) without binding at a step or at an edge; and
- the lower transversal die (5a) is subsequently pulled back from the cavity (13) as far as possible.

10. A method according to one of the preceding method claims, wherein the insertion opening (11) is closed by moving one of the transversal dies (5b) over the insertion opening (11); in particular together with an edge closing block (15).

11. A method according to one of the preceding method claims, wherein two lateral slides (4) are being moved for changing the volume, which are movable transversally to the moving direction of the transversal dies (5a, b), and which are each disposed on a respective side of the plane of the cutting blade (2).

12. A method according to one of the preceding method claims, wherein the lateral slides (4a, b) are jointly moved forward with a defined force simultaneously with or subsequent to the transversal dies (5a, b).

13. A method according to one of the preceding method claims, wherein the insertion opening (11) is opened for removing the divided pieces of meat (20) and after moving the movable wall components in a direction towards a large volume of the receiver mold (3), the receiver mold (3) is rotated, so that the meat pieces fall out following gravity, possibly supported by the one transversal die (5a), then acting from the top in downward direction.

14. A method according to one of the preceding method claims, wherein all components of the receiver mold (3) are moved apart from one another, so that they are at a distance from one another, but remain permanently connected with one another for performing a cleaning step after dividing the last piece of meat of a batch.

15. A method according to one of the preceding method claims, wherein the components which are movable transversally to the direction of the transversal dies, in particular the die slides (8), and the lateral slides (4) can be moved by means of a slotted link drive, and the slotted links are moved in particular by means of pneumatic cylinders (6).

## Revendications

1. Dispositif séparateur (1) avec
- une lame (2) et
- un moule de réception (3)qui se compose d'une moitié de moule inférieur (3a) et d'une moitié de moule supérieure (3b) pour la viande à séparer (20), le moule de réception (3) présentant une plaque de moule inférieure (16a) et une plaque de moule supérieure (16b) en tant que partie de moule,
- et avec un interstice de lame laissé entre (12) pour le passage du couteau (2),
- la plaque de moule supérieure (16b) étant ouverte en haut et pouvant être formée par une plaque de fermeture (7), **caractérisé en ce que**
- deux poinçons transversaux (5a, b) sont disposés sur des faces opposées du couteau (2) dans les moities de moule (3a, b), notamment dans la plaque inférieure de moule (16b) et dans la plaque supérieure de fermeture (7) et sont mobiles transversalement par rapport au pian principal des parties de moule en forme de plaque (16a, b),- la plaque de fermeture supérieure (7) présentant pour sa part une ouverture de passage en direction de la cavité de moule (13) servant d'ouverture d'insertion (11) qui est coulissant depuis le poinçon transversal supérieur (5b), qui peut être fermé par le poinçon transversal supérieur (5b) par déplacement d'un curseur de poinçon (8) sur l'ouverture d'insertion (11) dans laquelle le poinçon transversal supérieur (5b) est guidé.
- deux poinçons latéraux (4a, b) sont disposés dans la zone à hauteur de la plaque de moule supérieure et inférieure (16a, b), et sont mobiles transversalement au mouvement déplacement des poinçons transversaux (5a, b), dont la hauteur correspond à la hauteur des deux moitiés de la cavité de moule (13) et en forment une paroi latérale, et
- dans le but de nettoyage du dispositif séparateur, les parties de moule peuvent être déplacées transversalement au plan principal à distance les unes des autres sans perdre le contact mécanique entre elles.

2. Dispositif séparateur (1) selon l'une des revendications précédentes, **caractérisé en ce que** la cavité de moule (13) présente des parois (13a, B) s'étendant en particulier parallèle entre elles dans au moins une représentation en coupe inclinée par rapport aux surfaces latérales adjacentes, et en particulier la section transversale forme un parallélogramme.

3. Dispositif séparateur (1) selon l'une des revendications précédentes, **caractérisé en ce que** la plaque de fermeture (7) présente pour sa part au moins une ouverture de passage dans la direction de la cavité de moule (13) en tant qu'ouverture d'insertion (11) qui peut être fermée par le poinçon transversal supérieur (5b) ainsi que par un bloc de fermeture (15) raccordé.

4. Dispositif séparateur (1) selon l'une des revendications précédentes, **caractérisé en ce que** le coulisseau de poinçon (8) est coulissant parallèlement aux coulisseaux latéraux (4 resp 4a, b).

5. Dispositif séparateur (1) selon l'une des revendications précédentes, **caractérisé en ce que** le dispositif de découpage comprend une commande qui comprend des programmes différents de séparation pour par exemple d'une part le partage le plus exact possible du morceau de viande ou d'autre part le respect le plus exact possible d'un poids de consigne d'une des deux moitiés due la pièce de viande (20).

6. Dispositif séparateur (1) selon l'une des revendications précédentes, **caractérisé en ce que**
les parties de moule se composent de matière plastique en particulier de POM.

7. Dispositif séparateur (1) selon l'une des revendications précédentes, **caractérisé en ce qu'**en tant qu'élément d'entraînement pour l'approche ou la distance des parties de moues entre elles, on utilise des vérins pneumatiques (6).

8. Procédé pour la séparation d'un morceau de viande (20) contenu dans un moule de réception (3) dont les parois sont partiellement mobiles pour la modification du volume du moule de réception (3), au moyen d'un couteau (2) comprenant les étapes suivantes :
- Retrait des parties de paroi du moule de réception (3) sous forme de deux poinçons transversaux opposés (5a, b) dans deux parois opposées de la cavité de moule (13) du moule de réception (3) de sorte qu'il en résulte un volume le plus important,
- insertion du morceau de viande (20)
- fermeture de l'ouverture d'insertion (11) du moule de réception (3),
- mouvements d'avance des parties de parois mobiles en direction d'une réduction du volume jusqu'à ce que le morceau de viande (20) soit compressé dans le moule de réception (3) de sorte qu'il n'existe plus aucune cavité entre le morceau de viande (20) et le moule de réception (3) et
- séparation de la pièce de viande (20) à l'état compressé,
**caractérisé en ce que**
- pour obtenir deux moitiés de poids identiques du morceau de viande (20), les deux poinçons transversaux (5a, b) sont avancés avec la même force ou jusqu'a la même position axiale correspondante respectivement décrites lors de la compression en direction de la partie de viande,
- pour obtenir une moitié de poids identique du morceau de viande (20) l'un des poinçons transversaux (5a) subit une force de pression jusqu'à une position définie et l'autre poinçon transversal (5b) avec une force de pression définie pour la compression du morceau de viande (20).

9. Procédé selon l'une des revendications précédentes de procédé **caractérisé en ce que**
- lors de l'insertion du morceau de viande (20) dans le moule de réception (3), le poinçon transversal inférieur (5a) se trouve dans la position la plus avancée dans la cavité (13), afin que le morceau de viande (20) puisse glisser sur la face inférieure plane en continu de la cavité de moule (13) sans rester accrochée à un talon ou un bord, et
- ensuite le poinçon transversal inférieur (5a) est retiré le plus possible de la cavité (13).

10. Procédé selon l'une des revendications précédentes, **caractérisé en ce que** l'ouverture d'insertion (11) est fermée par déplacement d'un des poinçons transversaux (5b) sur l'ouverture d'insertion (11), en particulier ensemble avec un bloc de fermeture de bordure (15).

11. Procédé selon l'une des revendications précédentes, **caractérisé en ce que** pour la modification du volume, deux coulisseaux latéraux (4) mobiles transversalement au sens de déplacement du poinçon transversal (5a, b) et disposés chacun sur un côté du plan du couteau (2) sont déplacés.

12. Procédé selon l'une des revendications précédentes, **caractérisé en ce que** les coulisseaux latéraux (4a, b) sont poussés vers l'avant en même temps ou à la suite contre les poinçons transversaux (5a, b) en commun par une force définie.

13. Procédé selon l'une des revendications précédentes, **caractérisé en ce que** pour le retrait des morceaux de viande séparés, l'ouverture d'insertion (11) est ouverte et après la rétraction des parties de paroi mobiles en direction d'un volume important du moule de réception (3) et rotation du moule de réception (3) de sorte que les morceaux de viandes tombent par la force de la pesanteur, éventuellement soutenus par le coulisseau transversal (5a) agissant vers le bas ou vers le haut.

14. Procédé selon l'une des revendications précédentes, **caractérisé en ce qu'**après la séparation du dernier morceau de viande d'une charge tous les composants du moule de réception (3) sont déplacés à distance les uns des autres mais restent reliées fixement entre eux pour l'exécution de l'étape de nettoyage.

15. Procédé selon l'une des revendications précédentes, **caractérisé en ce que** des composants mobiles transversalement à la direction de poinçon en particulier des curseurs de poinçons (8) et des curseurs latéraux (4) sont déplacés au moyen de la commande de coulisse et les coulisses sont déplacées au moyen de vérins pneumatiques (6)
